# EUROPEAN PATENT APPLICATION

(11) **EP 2 775 752 A1**
(43) Date of publication of application: **10.09.2014**
(21) Application number: 11875222.9
(22) Date of filing: 31.10.2011
(51) Int. Cl.: H04W 24/10

(54) **CHANNEL QUALITY INFORMATION CALCULATION METHOD, FEEDBACK METHOD, AND DEVICE**

(71) Applicant: Fujitsu Limited, Kawasaki-shi, Kanagawa 211-8588 (JP)
(72) Inventor: WANG, Yi, Beijing 100025 (CN); ZHANG, Yuantao, Beijing 100025 (CN); ZHOU, Hua, Beijing 100025 (CN); ZHANG, Yi, Beijing 100025 (CN)
(74) Representative: Stebbing, Timothy Charles
(86) International application number: PCT/CN2011/081599
(87) International publication number: WO 2013/063752

(57) **Abstract**

Embodiments of the present invention provide methods for calculating and feeding back channel quality information and apparatus. The method for calculating includes: calculating, by a terminal, channel quality information (CQI) of a non-backward compatible carrier, according to usable PDSCH resources in the non-backward compatible carrier; wherein resources occupied by a downlink control channel are not assumed into the usable PDSCH resources in the non-backward compatible carrier, the number of the resources occupied by the downlink control channel being less than the number of usable resources configured by a base station for a downlink control channel in a backward compatible carrier. With the methods and apparatus provided by embodiments of the present invention, calculation of corresponding CQI varies along with a change of a usable PDSCH physical resource, so as to avoid degradation of accuracy of CQI calculation due to a load change, thereby improving the performance of the system.

## Description

### Technical Field

The present invention relates to a transmission technology in a radio communication system, and in particular to methods for calculating and feeding back downlink channel quality information and apparatus in a long-term evolution (LTE)/LTE-advanced system.

### Background Art

In order to realize downlink adaptive scheduling at a base station side, the base station needs to learn channel quality information of downlink. A downlink channel is usually estimated by measuring a downlink reference signal by a user, and corresponding channel quality information (CQI), a precoding matrix index (PMI) and a rank, are reported to the base station. Calculation of CQI by a user needs to be based on a group of predefined assumptions, which are known to the user and a base station, so as to ensure that corresponding channel information may be correctly concluded after the base station receives the CQI fed back by the user. Such a group of assumptions may include available physical downlink shared channel (PDSCH) resources, a power ratio of a downlink reference signal to the PDSCH, and an available downlink transmission mode, etc. The downlink reference signal may be for example, a cell-specific reference signal (CRS), or a channel state information reference signal (CSI-RS). Wherein, the available PDSCH resources do not include physical resources that are possibly occupied by other signals or channels, such as resources occupied by such downlink control channels as a physical downlink control channel (PDCCH), a physical control format indicator channel (PCFICH), and a physical hybrid ARQ indicator channel (PHICH), and the available PDSCH resources do not include resources occupied by reference signals, such as a CRS, and a demodulation reference signal (DM-RS) either. Such overheads have direct effects on a modulation and coding scheme (MCS) of the PDSCH and a size of a corresponding transport block (TB). In order to ensure performance of adaptive transmission, the MCS on which the CQI fed back by the user is based and the MCS on which transmission of the PDSCH by the user scheduled by the base station is based should be compatible as possible. In an LTE-advance system, corresponding assumptions are provided:
the former 3 orthogonal frequency division multiplexing (OFDM) symbols of each subframe are occupied by control information, that is, which are not included into the load of a PDSCH;
resources occupied by a primary synchronization signal (PSS), a secondary synchronization signal (SSS) and a physical broadcast channel (PBCH) are not taken into account;
a cyclic prefix (CP) length is non-MBSFN (multicast-broadcast single frequency network) subframe configuration;
a redundancy version number is 0;
for a user of a transmission mode 9, if a precoding matrix indicator (PMI)/rank indication (RI) report(s) is/are configured, a resource occupied by a UE-specific reference signal is determined according to a rank of a latest report;
assume no resources allocated for CSI-RS and zero-power CSI-RS;
assume no resources allocated for PRS (positioning reference signa);
the PDSCH transmission scheme given by Table 7.2.3-0 of TS 36.213 depending on the transmission mode currently configured for the UE; and
a power ratio is determined according to a given power ratio of a CRS to a PDSCH or of a CSI-RS to a PDSCH.

In the implementation of the present invention, the inventors found that the number of resources in a non-backward compatible carrier in the carrier aggregation technology proposed in the LTE-A system and an almost blank subframe (ABS) configured for a macro cell in a heterogeneous network scenario available for carrying PDSCHs is obviously increased over the number of resources in a conventional stand-alone carrier (i.e. a backward compatible carrier) or a normal subframe available for carrying PDSCHs. If a user calculates corresponding CQI still according to an existing assumption, it will not be compatible with a resource occupied by the base station in transmitting a PDSCH, thereby resulting incorrect calculation of CQI and degradation of the performance of the system.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary of the Invention

An object of the embodiments of the present invention is to provide methods for calculating and feeding back channel quality information and apparatus, so as to avoid degradation of accuracy of CQI calculation due to a load change, thereby improving the performance of the system.

According to one aspect of the embodiments of the present invention, there is provided a method for calculating channel quality information, including:
calculating, by a terminal, channel quality information (CQI) of a non-backward compatible carrier, according to usable PDSCH resources in the non-backward compatible carrier;
wherein resources occupied by a downlink control channel are not assumed to the usable PDSCH resources in the non-backward compatible carrier, the number of resources occupied by the downlink control channel being less than the number of usable resources configured by a base station for a downlink control channel in a backward compatible carrier.

According to another aspect of the embodiments of the present invention, there is provided a method for calculating channel quality information, including:
determining, by a terminal, usable PDSCH resources in a non-backward compatible carrier, according to a predefined proportion of the number of usable PDSCH resources to the number of the total resources or a predefined proportion of the number of unusable PDSCH resources to the number of the total resources, when the terminal is configured with the non-backward compatible carrier, and
calculating, by the terminal, CQI of the non-backward compatible carrier, according to the determined usable PDSCH resources in the non-backward compatible carrier.

According to still another aspect of the embodiments of the present invention, there is provided a method for calculating channel quality information, including:
calculating, by a terminal, CQI of an ABS, according to usable PDSCH resources in the ABS;
wherein the number of resources occupied by a downlink control channel are not assumed into the usable PDSCH resources in the ABS, and the number of resources occupied by a CRS determined according to an MBSFN subframe and the number of resources occupied by a CP determined according to a MBSFN subframe are not assumed into the usable PDSCH resources in the ABS either; and wherein the number of the resources occupied by the downlink control channel is 0.

According to further still another aspect of the embodiments of the present invention, there is provided a method for calculating channel quality information, including:
determining, by a terminal, usable PDSCH resources in an ABS, according to a predefined proportion of the number of usable PDSCH resources to the number of the total resources or a predefined proportion of the number of unusable PDSCH resources to the number of the total resources, when the terminal is configured with the ABS; and
calculating, by the terminal, CQI of the ABS, according to the determined usable PDSCH resources in the ABS.

According to further still another aspect of the embodiments of the present invention, there is provided a method for feeding back channel quality information, including:
calculating, by a terminal, CQI of an ABS, according to usable PDSCH resources in the ABS;
determining, by the terminal, a timing for feeding back the CQI of the ABS, according to a high-layer signaling transmitted by a base station; and
feeding back, by the terminal, the CQI of the ABS to the base station at the determined timing.

According to further still another aspect of the embodiments of the present invention, there is provided a method for calculating channel quality information, including:
calculating CQI by a terminal according to usable PDSCH resources;
wherein resources occupied by a UE-specific reference signal are not assumed into the usable PDSCH resources.

According to further still another aspect of the embodiments of the present invention, there is provided terminal equipment, used for calculating channel quality information, wherein the terminal equipment includes:
a first calculating unit configured to calculate channel quality information (CQI) of a non-backward compatible carrier, according to usable PDSCH resources in the non-backward compatible carrier;
wherein resources occupied by a downlink control channel are not assumed into the usable PDSCH resources in the non-backward compatible carrier, the number of resources occupied by the downlink control channel being less than the number of usable resources configured by a base station for a downlink control channel in a backward compatible carrier.

According to further still another aspect of the embodiments of the present invention, there is provided terminal equipment, used for calculating channel quality information, wherein the terminal equipment includes:
a determining unit configured to determine usable PDSCH resources in a non-backward compatible carrier, according to a predefined proportion of the number of usable PDSCH resources to the number of the total resources or a predefined proportion of the number of unusable PDSCH resources to the number of the total resources, when the non-backward compatible carrier is configured; and
a calculating unit configured to calculate CQI of the non-backward compatible carrier, according to the usable PDSCH resources in the non-backward compatible carrier determined by the determining unit.

According to further still another aspect of the embodiments of the present invention, there is provided terminal equipment, used for calculating channel quality information, wherein the terminal equipment includes:
a calculating unit configured to calculate channel quality information (CQI) of an ABS, according to usable PDSCH resources in the ABS;
wherein the number of resources occupied by a downlink control channel are not assumed into the usable PDSCH resources in the ABS, and the number of resources occupied by a cell-specific reference signal determined according to an MBSFN subframe and the number of resources occupied by a CP determined according to an MBSFN subframe are not assumed into the usable PDSCH resources in the ABS either; and wherein the number of resources occupied by the downlink control channel is 0.

According to further still another aspect of the embodiments of the present invention, there is provided terminal equipment, used for calculating channel quality information, wherein the terminal equipment includes:
a determining unit configured to determine usable PDSCH resources in an ABS, according to a predefined proportion of the number of usable PDSCH resources to the number of the total resources or a predefined proportion of the number of unusable PDSCH resources to the number of the total resources, when the ABS is configured; and
a calculating unit configured to calculate CQI of the ABS, according to the usable PDSCH resources in the ABS determined by the determining unit.

According to further still another aspect of the embodiments of the present invention, there is provided terminal equipment, used for feeding channel quality information back to a base station, wherein the terminal equipment includes:
a calculating unit configured to calculate CQI of an ABS, according to usable PDSCH resources in the ABS;
a determining unit configured to determine a timing for feeding back the CQI of the ABS calculated by the calculating unit, according to a high-layer signaling transmitted by the base station; and
a feedback unit configured to feed back the CQI of the ABS to the base station at the timing determined by the determining unit.

According to further still another aspect of the embodiments of the present invention, there is provided terminal equipment, used for calculating channel quality information, wherein the terminal equipment includes:
a calculating unit configured to calculate channel quality information (CQI) according to usable PDSCH resources; wherein resources occupied by a UE-specific reference signal are not assumed into the usable PDSCH resources.

According to further still another aspect of the embodiments of the present invention, there is provided a computer-readable program, wherein when the program is executed in terminal equipment, the program enables a computer to carry out the method for calculating or feeding back channel quality information as described above in the terminal equipment.

According to further still another aspect of the embodiments of the present invention, there is provided a storage medium in which a computer-readable program is stored, wherein the computer-readable program enables a computer to carry out the method for calculating or feeding back channel quality information as described above in terminal equipment.

The advantage of the embodiments of the present invention resides in that with the new methods for calculating and feeding back channel quality information and apparatus provided by embodiments of the present invention, calculation of corresponding CQI varies along with a change of a usable PDSCH physical resource, so as to avoid degradation of accuracy of CQI calculation due to a load change, thereby improving the performance of the system.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

### Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated or reduced in size. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment. In the drawings:
Figure 1 is a flowchart of a method for calculating channel quality information of Embodiment 1 of the present invention;
Figure 2 is a flowchart of a method for calculating channel quality information of Embodiment 2 of the present invention;
Figure 3 is a flowchart of a method for calculating channel quality information of Embodiment 3 of the present invention;
Figure 4 is a flowchart of a method for calculating channel quality information of Embodiment 4 of the present invention;
Figure 5 is a flowchart of a method for feeding back channel quality information of Embodiment 5 of the present invention;
Figure 6 is a flowchart of a method for feeding back channel quality information of Embodiment 6 of the present invention;
Figure 7 is a schematic diagram of the structure of terminal equipment of Embodiment 7 of the present invention;
Figure 8 is a schematic diagram of the structure of terminal equipment of Embodiment 8 of the present invention;
Figure 9 is a schematic diagram of the structure of terminal equipment of Embodiment 9 of the present invention;
Figure 10 is a schematic diagram of the structure of terminal equipment of Embodiment 10 of the present invention;
Figure 11 is a schematic diagram of the structure of terminal equipment of Embodiment 12 of the present invention; and
Figure 12 is a schematic diagram of the structure of terminal equipment of Embodiment 12 of the present invention.

### Detailed Description of the Invention

Foregoing and other features of the embodiments of the present invention will become apparent with reference to the drawings and the following description. These embodiments are illustrative only and are not intended to limit the present invention. For easy understanding of the principle and embodiments of the present invention by those skilled in the art, the embodiments of the present invention shall be described taking methods for calculating and feeding back channel quality information in an LTE-advanced system and/or heterogeneous network scenario as examples. However, it should be understood that the embodiments of the present invention are not limited thereto, and are applicable to other systems related to channel quality information.

Application scenarios of the embodiments of the present invention shall be described first, so that the features of the present invention are more clear.

In order to satisfy a requirement of a high data rate, a carrier aggregation technology has been proposed in a long-term evolution-advanced (LTE-A) system, so as to support a bandwidth capable of providing a requirement of a high data rate. In the carrier aggregation technology, each aggregated carrier is referred to as a component carrier (CC). In Rel-10 of the LTE-A system, a carrier includes a backward compatible carrier and a non-backward compatible carrier. A terminal of Rel-10 may access to the backward compatible carrier, and terminals of Rel-8 and Rel-9 may also access to it. Only a user of a higher version, such as a terminal of Rel-11, may access to the non-backward compatible carrier, and terminals of Rel-8 and Rel-9 may not access to it. Wherein, the non-backward compatible carrier includes an extension carrier and a carrier segment. These two types of carriers cannot operate independently, and need a backward compatible carrier to operate jointly. The backward compatible carrier is hereinafter referred to as a stand-alone carrier. A non-backward compatible carrier is different from a stand-alone carrier, and does not transmit downlink control signaling, for example, PDCCH/PCFICH/PHICH, at former X symbols of each subframe, where, X=1∼4. And it is possible that the non-backward compatible carrier is not configured with a cell common reference signal, such as a cell-specific reference signal (CRS). It can be seen that for a terminal configured with a non-backward compatible carrier, its usable PDSCH resources have changed.

Furthermore, as presence of a new scenario, such as a heterogeneous network, interference between a macro base station and a pico base station becomes a critical issue in optimization of an LTE-A system. Currently, a macro cell is configured with an almost blank subframe (ABS), so as to avoid interference to an edge user in a pico cell by it. In order to avoid interference to a PDCCH of a pico cell, downlink control signaling is not transmitted at former X symbols in the ABS, where, X=1∼4, and only a CRS is transmitted at former 2 OFDM symbols. It can be seen that for a terminal configured with an ABS, its usable PDSCH resources have changed also.

Likewise, for a terminal configured with both a non-backward compatible carrier and an ABS, a case where load resources have changed also exists. The change of the load resources is prone to resulting in inaccuracy of CQI calculation.

Furthermore, an open-loop multi-antenna transmission mode based on a UE-specific reference signal, such as a transmission diversity based on a DM-RS or a random precoding scheme, is widely studied. In that cases, the user needs not to feed back a corresponding precoding matrix index and rank index (PMI/RI), but is configured with a UE-specific reference signal. Such a case will also result in a change of load resources.

On the basis of the above application scenarios, methods for calculating and feeding back channel quality information and apparatus are proposed in the embodiments of the present invention.

### Embodiment 1

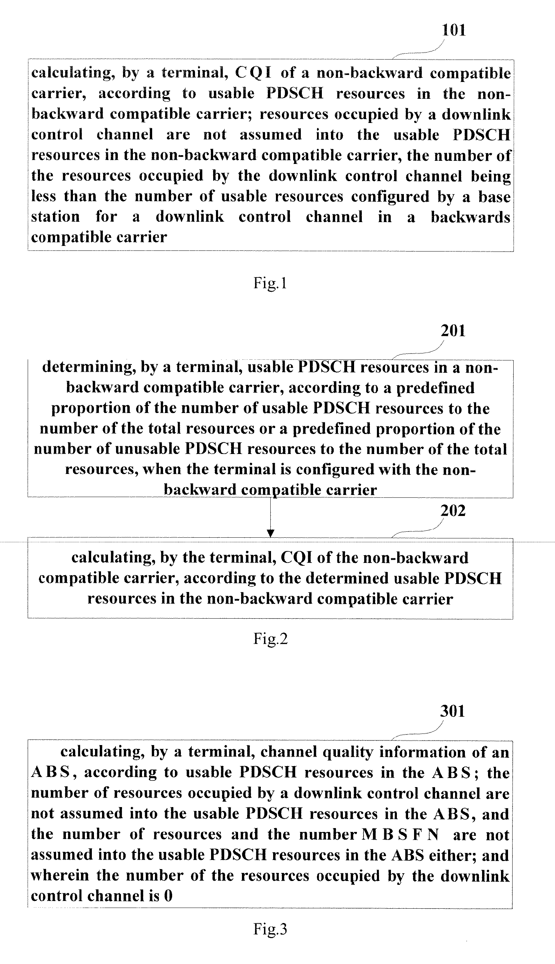

Fig. 1 is a flowchart of a method for calculating channel quality information provided by an embodiment of the present invention. Referring to Fig. 1, the method includes:
step 101: calculating, by a terminal, channel quality information (CQI) of a non-backward compatible carrier, according to usable physical downlink shared channel (PDSCH) resources in the non-backward compatible carrier.

In this embodiment, the non-backward compatible carrier may be an extension carrier, or may be a carrier segment, or may be both.

In this embodiment, as a non-backward compatible carrier is configured, resources occupied by a downlink control channel and a downlink reference signal have changed, and before calculating the CQI, the usable PDSCH resources are determined according to resources occupied by the non-backward compatible carrier.

In an embodiment, resources occupied by a downlink control channel are not assumed into the usable PDSCH resources in the non-backward compatible carrier, the number of the resources occupied by the downlink control channel being less than the number of usable resources configured by a base station for a downlink control channel in a backward compatible carrier.

Wherein, when the downlink control channel does not occupy a resource of the non-backward compatible carrier, that is, the number of resources of the non-backward compatible carrier actually occupied by the downlink control channel is 0, as the non-backward compatible carrier does not transmit a downlink control channel (such as a PDSCH and/or a PCFICH and/or a PHICH) at former X (X=1∼4) symbols of each subframe, when determining the usable PDSCH resources in the non-backward compatible carrier, assumes no the number of resources occupied by a downlink control channel. And as no resource is reserved for a downlink control channel, that is, resources configured for a downlink control channel need not to be removed from the total resources of the non-backward compatible carrier, resources possibly reserved for a downlink control channel can be added to the usable PDSCH resources in the non-backward compatible carrier, that is, the usable PDSCH resources in the non-backward compatible carrier include these resources.

Wherein, when the number of resources of the non-backward compatible carrier actually occupied by the downlink control channel is less than the number of usable resources configured by the base station for a downlink control channel in the backward compatible carrier, that is, the number of resources of the non-backward compatible carrier actually occupied by the downlink control channel is 1 or 2, as the downlink control channel occupies part of the resources of the non-backward compatible carrier, for example, downlink control signaling is transmitted at former Y symbols of each subframe of the non-backward compatible carrier, where, Y is a positive integer less than 3, when determining the usable PDSCH resources in the non-backward compatible carrier, these occupied resources are taken into account, and these occupied resources need to be removed from the total resources, hence, the usable PDSCH resources in the non-backward compatible carrier do not include the resources actually occupied by the downlink control channel. For example, if a PDCCH carrying common downlink control information is transmitted at a first OFDM symbol of the non-backward compatible carrier, the usable PDSCH resources in the non-backward compatible carrier do not include the first OFDM symbol.

In this embodiment, as the usable PDSCH resources in the non-backward compatible carrier are determined, the terminal equipment may calculate CQI of the non-backward compatible carrier accordingly. A method of calculation may refer to the prior art, and this embodiment is not limited thereto.

In another embodiment of step 101, the usable PDSCH resources in the non-backward compatible carrier may further be determined according to resource occupancy of a CRS. Wherein, when the CRS does not occupy a resource of the non-backward compatible carrier, the number of resources occupied by the CRS are not assumed into the usable PDSCH resources in the non-backward compatible carrier, and the number of resources occupied by the CRS is 0. That is, as it is possible that the non-backward compatible carrier is not configured with a CRS, a resource that initially occupied by the CRS, that is, a resource that possibly preconfigured by the base station for the CRS, should be added to the usable PDSCH in the non-backward compatible carrier, and when determining the usable PDSCH in the non-backward compatible carrier, assumes no resource occupied by the CRS.

In still another embodiment of step 101, for a terminal configured with a UE-specific reference signal (UE-specific RS), the number of resources of the non-backward compatible carrier occupied by the RS may be determined according to configuration fed back by a precoding matrix index and rank index (PMI/RI), and then the usable PDSCH resources in the non-backward compatible carrier may be determined according to the number of resources of the non-backward compatible carrier occupied by the RS. For example, if PMI/RI feedback is configured, the terminal determines the number of resources of the non-backward compatible carrier occupied by the RS according to an RI that is latest fed back; and if no PMI/RI feedback is configured, the terminal determines the number of resources of the non-backward compatible carrier occupied by the RS according to predefinition. For example, in transmission of a space frequency block code (SFBC) based on a UE-specific RS where the UE is not configured with PMI/RI feedback, the number of resources of the non-backward compatible carrier occupied by the RS is determined by the number of transmission antennas. When the number of resources of the non-backward compatible carrier occupied by the RS is determined, when determining the usable PDSCH resources in the non-backward compatible carrier, these occupied resources should also be removed, that is, the usable PDSCH resources in the non-backward compatible carrier do not include the resources occupied by the RS that are determined herein.

According to the method of Embodiment 1 of the present invention, when the base station configures a non-backward compatible carrier for the terminal, as the number of resources occupied by a downlink control channel and a downlink reference signal and so on is different from that of a backward compatible carrier, the terminal may determine the usable PDSCH resources in the non-backward compatible carrier based on ① or ①+② or ①+②+③ in the following assumptions when calculating CQI:
① assuming no resources occupied by a downlink control channel, or the number of resources occupied by a downlink control channel being Y OFDM symbols, where, Y being an integer less than 3;
② assuming no resources occupied by a CRS; and
③ for a user configured with a UE-specific RS, if PMI/RI feedback is configured, the number of resources occupied by the RS being determined according to an RI that is latest fed back; and if no PMI/RI feedback is configured, the number of resources occupied by the RS being determined according to predefinition.

Assumptions different from an existing standard are described above. Other contents may be consistent with the existing standard, which are omitted herein.

With the method of this embodiment, calculation of CQI varies along with a change of a usable PDSCH resource, so as to avoid degradation of accuracy of CQI calculation due to a load change, thereby improving the performance of the system.

### Embodiment 2

Fig. 2 is a flowchart of a method for calculating channel quality information provided by an embodiment of the present invention. Referring to Fig. 2, the method includes:
step 201: determining, by a terminal, usable PDSCH resources in a non-backward compatible carrier, according to a predefined proportion of the number of usable PDSCH resources to the number of the total resources or a predefined proportion of the number of unusable PDSCH resources to the number of the total resources, when the terminal is configured with the non-backward compatible carrier, and
step 202: calculating CQI of the non-backward compatible carrier by the terminal according to the determined usable PDSCH resources in the non-backward compatible carrier.

In this embodiment, when the terminal is configured with a non-backward compatible carrier, the numbers of resources occupied by a downlink control channel and a downlink common reference signal and so on are not respectively and definitely provided, while a proportion of the number of usable PDSCH resources to the number of the total resources or a proportion of the number of unusable PDSCH resources to the number of the total resources is directly defined, thereby usable PDSCH resources in a non-backward compatible carrier may be directly determined according to this proportion, and CQI may be calculated accordingly. Wherein, besides this definition, other contents may be consistent with an existing standard, which shall not be described herein any further.

With the method of this embodiment, degradation of accuracy of CQI calculation due to a load change may be avoided, thereby improving the performance of the system.

### Embodiment 3

Fig. 3 is a flowchart of a method for calculating channel quality information provided by an embodiment of the present invention. Referring to Fig. 3, the method includes:
step 301: calculating, by a terminal, channel quality information (CQI) of an ABS, according to usable PDSCH resources in the ABS.

In this embodiment, as an ABS is configured, the number of resources occupied by a downlink control channel, a downlink reference signal and a CP length and so on is different from that of a normal subframe, and the usable PDSCH resources need to be determined according to resources actually occupied by the ABS before calculating the CQI used by the ABS.

In an embodiment, the number of resources occupied by a downlink control channel are not assumed into the usable PDSCH resources in the ABS, and the numbers of resources occupied by a CRS and a CP determined according to a MBSFN subframe are not assumed into the usable PDSCH resources in the ABS either; and wherein the number of resources occupied by the downlink control channel is 0.

Wherein, as the downlink control channel does not occupy a resource of the ABS, that is, the number of resources of the ABS actually occupied by the downlink control channel is 0, and as downlink control signaling is not transmitted at former X (X=1∼4) symbols in the ABS, when determining the usable PDSCH resources in the ABS, assumes no the number of resources occupied by a downlink control channel. And as no resource is reserved for a downlink control channel in the ABS, that is, resources configured for a downlink control channel need not to be removed from the total resources of the ABS, the number of resources possibly reserved for a downlink control channel can be added to the usable PDSCH resources in the ABS, that is, the usable PDSCH resources in the ABS include these resources.

Furthermore, as a CRS and a CP may also occupy resources in the ABS, in step 301, the terminal may further remove resources occupied by the CRS and the CP length (i.e. resources occupied by the CP) from the total resources of the ABS, that is, the determined usable PDSCH resources in the ABS do not include the number of resources occupied by the CRS and the resources occupied by the CP. Wherein, as a CRS is only transmitted at former 2 OFDM symbols of the ABS, the resources occupied by the CRS may be determined according to an MBSFN subframe, the CP length may further be determined according to the MBSFN subframe, and the resources occupied by the CRS and the CP may be removed from the total resources.

In this embodiment, as the usable PDSCH resources in the ABS are determined, the terminal equipment may calculate the CQI of the ABS accordingly. A method of calculation may refer to the prior art, and this embodiment is not limited thereto.

In another embodiment of step 301, for a terminal configured with a UE-specific reference signal (UE-specific RS), the resources of the ABS occupied by the UE-specific RS may be determined according to configuration fed back by a precoding matrix index and rank index (PMI/RI), and then the resources may be removed from the total resources of the ABS. For example, if PMI/RI feedback is configured, the terminal determines the number of resources of the ABS occupied by the UE-specific RS according to an RI that is latest fed back; and if no PMI/RI feedback is configured, the terminal determines the number of resources of the ABS occupied by the UE-specific RS according to predefinition. Wherein, the predefinition is similar to that in Embodiment 1. For example, in transmission of an SFBC based on a UE-specific RS where the UE is not configured with PMI/RI feedback, the number of resources occupied by the RS is determined by the number of transmission antennas. When the number of resources occupied by the UE-specific RS is determined, these resources occupied by the UE-specific RS may be removed from the total resources of the ABS, that is, the usable PDSCH resources in the ABS do not include the resources occupied by the UE-specific RS that are determined herein.

According to the method of Embodiment 3 of the present invention, when the base station configures an ABS for the terminal, as the number of resources occupied by a downlink control channel and a downlink reference signal and so on is different from that of a normal subframe, the terminal may determine the usable PDSCH resources in the ABS based on①+②+③ or ①+ ②+③+④ in the following assumptions when calculating CQI used by the ABS:
① assuming no resources occupied by a downlink control channel,;
② determining the number of resources occupied by a CRS according to a MBSFN subframe, that is, CRS is contained in only 2 OFDM symbols;
③ determining the CP length according to the MBSFN subframe; and
④ for a user configured with a UE-specific RS, if PMI/RI feedback is configured, the number of resources occupied by the RS being determined according to an RI that is latest fed back; and if no PMI/RI feedback is configured, the number of resources occupied by the RS being determined according to predefinition.

Assumptions different from an existing standard are described above. Other contents may be consistent with the existing standard, which are omitted herein.

With the method of this embodiment, calculation of corresponding CQI varies along with a change of a usable PDSCH resource, so as to avoid degradation of accuracy of CQI calculation due to a load change, thereby improving the performance of the system.

### Embodiment 4

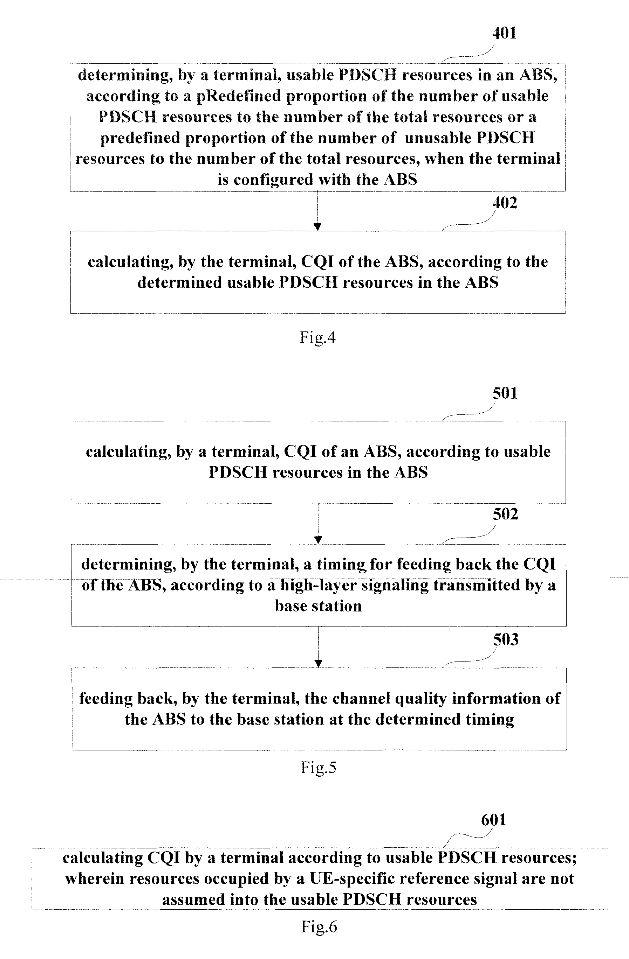

Fig. 4 is a flowchart of a method for calculating channel quality information provided by an embodiment of the present invention. Referring to Fig. 4, the method includes:
step 401: determining, by a terminal, usable PDSCH resources in an ABS, according to a predefined proportion of the number of usable PDSCH resources to the number of the total resources or a predefined proportion of the number of unusable PDSCH resources to the number of the total resources, when the terminal is configured with the ABS; and
step 402: calculating, by the terminal, CQI of the ABS, according to the determined usable PDSCH resources in the ABS.

In this embodiment, when the terminal is configured with a ABS, the numbers of resources occupied by a downlink control channel and a downlink common reference signal and so on are not respectively and definitely provided, while a proportion of the number of usable PDSCH resources to the number of the total resources or a proportion of the number of unusable PDSCH resources to the number of the total resources is directly defined, thereby usable PDSCH resources in the ABS may be directly determined according to this proportion, and CQI may be calculated accordingly. Wherein, besides this definition, other contents may be consistent with an existing standard, which shall not be described herein any further.

With the method of this embodiment, degradation of accuracy of CQI calculation due to a load change may be avoided, thereby improving the performance of the system.

In practical application, the methods of the above embodiments may be used in a combined manner, or may be used separately. For example, CQI is determined by using the method of Embodiment 1 or Embodiment 2 according to whether a carrier is a non-backward compatible carrier, without taking whether a subframe is an ABS into account. And respective CQI may be calculated according to the methods of Embodiment 1 (or Embodiment 2) and Embodiment 3 (or Embodiment 4), jointly taking whether a subframe is an ABS and whether a carrier is a non-backward compatible carrier into account.

### Embodiment 5

Fig. 5 is a flowchart of a method for feeding back channel quality information provided by an embodiment of the present invention. Referring to Fig. 5, the method includes:
step 501: calculating, by a terminal, CQI of an ABS, according to usable PDSCH resources in the ABS;
step 502: determining, by the terminal, a timing for feeding back the CQI of the ABS, according to a high-layer signaling transmitted by a base station; and
step 503: feeding back, by the terminal, the CQI of the ABS to the base station at the determined timing.

Wherein, step 501 is a process of determining the CQI of the ABS, which may be carried out by using the method of Embodiment 3 or Embodiment 4, and shall not be described herein any further.

In step 502, the base station may indicate the timing for feeding back the CQI of the ABS by the terminal by transmitting the high-layer signaling, such as when to transmit the CQI, or in what cycle to transmit the CQI, etc.

In step 503, after receiving the indication transmitted by the base station, the terminal may feedback the CQI of the ABS that is determined previously according to the indication.

With the method of this embodiment, a feedback step of the CQI of the ABS is added, which provides a basis for efficiently adaptive scheduling downlink by the base station.

### Embodiment 6

Fig. 6 is a flowchart of a method for calculating channel quality information of Embodiment 6 of the present invention. Referring to Fig. 6, the method includes:
step 601: calculating CQI by a terminal according to usable PDSCH resources; wherein resources occupied by a UE-specific reference signal are not assumed into the usable PDSCH resources.

In this embodiment, whether a carrier is a non-backward compatible carrier and whether a subframe is an ABS are not limited, and only if a UE-specific reference signal is configured, after resources occupied by the UE-specific reference signal are determined, these resources may be removed from the total resources, the remaining resources may be taken as usable PDSCH resources, and the CQI may be calculated according to the usable PDSCH resources.

This embodiment is applicable to an open-loop multi-antenna transmission mode based on a UE-specific reference signal, such as a transmission diversity or a random precoding scheme based on a DM-RS. In such a case, when determining the usable PDSCH resources, only resources occupied by the UE-specific reference signal are taken into account.

In an embodiment, besides the resources occupied by the UE-specific reference signal, resources occupied by a downlink control channel may also be taken into account, and resources actually occupied by the downlink control channel may be removed from the total resources. At this moment, the usable PDSCH resources do not include the resources actually occupied by the downlink control channel, hence, the number of resources occupied by the downlink control channel is a positive integer less than 3. Similar to Embodiment 1, if the downlink control channel does not occupy a resource, that is, the number of resources occupied by the downlink control channel is 0, resources possibly configured for the downlink control channel may be added to the usable PDSCH resources; and if the downlink control channel occupies only a part of the resources possibly configured for it, that is, the number of resources occupied by the downlink control channel is 1 or 2, the resources actually occupied by the downlink control channel are removed from the total resources.

In another embodiment, besides the resources occupied by the UE-specific reference signal, or besides the resources occupied by the UE-specific reference signal and the resources occupied by the downlink control channel, resources occupied by a CRS may also be taken into account, and the resources occupied by the CRS may be removed from the total resources. At this moment, the usable PDSCH resources do not include the resources occupied by the CRS. Wherein, it is possible that the CRS occupies no resource, that is, the number of resources occupied by the CRS is 0. In such a case, resources possibly configured for the CRS may be added to the usable PDSCH resources.

In still another embodiment, besides the resources occupied by the UE-specific reference signal, or besides the resources occupied by the UE-specific reference signal and the resources occupied by the downlink control channel, resources occupied by a CRS and resources occupied by a CP may also be taken into account, and the resources occupied by the CRS and the resources occupied by the CP may be removed from the total resources. Wherein, the resources occupied by the CRS and the resources occupied by the CP may be determined according to a MBSFN subframe. At this moment, the usable PDSCH resources do not include the resources occupied by the CRS determined according to the MBSFN subframe and the resources occupied by the CP determined according to the MBSFN subframe.

In further still another embodiment, the resources occupied by the UE-specific reference signal are determined according to whether PMI/RI feedback is configured. If PMI/RI feedback is configured, the resources occupied by the UE-specific reference signal are determined according to an RI that is latest fed back; and if no PMI/RI feedback is configured, the resources occupied by the UE-specific reference signal are determined according to predefinition.

In the embodiment, carrier type and subframe type are not limited, and the contents identical to those in embodiments 1-4 are incorporated herein, and shall not be described herein any further. With the method of this embodiment, degradation of accuracy of CQI calculation due to a load change may be avoided, thereby improving the performance of the system.

An embodiment of the present invention further provides terminal equipment, as described in Embodiment 7 below. As the principle of the terminal equipment for solving problems is similar to that of the method for calculating channel quality information in Embodiment 1 or Embodiment 3, the implementation of the method may be referred to for the implementation of the terminal equipment, and the repeated parts shall not be described any further.

### Embodiment 7

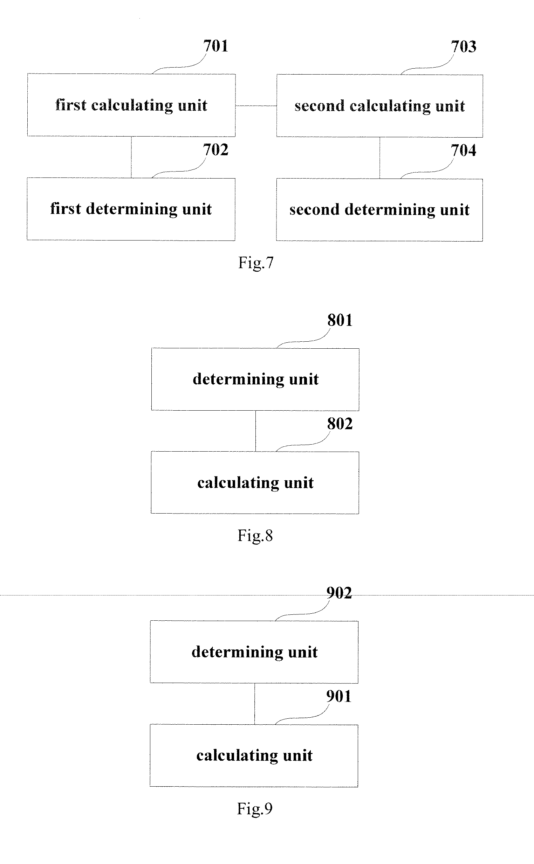

Fig. 7 is a schematic diagram of the structure of the terminal equipment of Embodiment 7 of the present invention. The terminal equipment is used for calculating channel quality information. Referring to Fig. 7, the terminal equipment includes:
a first calculating unit 701 configured to calculate channel quality information (CQI) of a non-backward compatible carrier according to usable PDSCH resources in the non-backward compatible carrier;
wherein resources occupied by a downlink control channel are not assumed into the usable PDSCH resources in the non-backward compatible carrier, the number of resources occupied by the downlink control channel being less than the number of usable resources configured by a base station for a downlink control channel in a backward compatible carrier.

In an embodiment, the number of resources of the non-backward compatible carrier actually occupied by the downlink control channel is 0, that is, the downlink control channel does not occupy a resource of the non-backward compatible carrier. In another embodiment, the number of resources of the non-backward compatible carrier actually occupied by the downlink control channel is 1 or 2, that is, the number of resources of the non-backward compatible carrier actually occupied by the downlink control channel the number of usable resources configured by a base station for a downlink control channel in a backward compatible carrier.

In an embodiment, resources occupied by a cell-specific reference signal (CRS) are not assumed into the usable PDSCH resources in the non-backward compatible carrier; wherein, the number of resources occupied by the CRS is 0.

In an embodiment, if the terminal equipment is configured with a UE-specific reference signal, resources occupied by a UE-specific reference signal are not assumed into the usable PDSCH resources in the non-backward compatible carrier, and the terminal equipment further includes:
a first determining unit 702 configured to determine resources of the non-backward compatible carrier occupied by the UE-specific reference signal;
wherein, when the terminal equipment is configured with feedback of precoding matrix index and rank index (PMI/RI), the first determining unit 702 determines the resources of the non-backward compatible carrier occupied by the UE-specific reference signal according to an RI that is latest fed back; and when the terminal equipment is not configured with the feedback of the PMI/RI, the first determining unit 702 determines the resources of the non-backward compatible carrier occupied by the UE-specific reference signal according to predefinition.

In another embodiment, when the terminal equipment is configured with an almost blank subframe (ABS), the terminal equipment further includes:
a second calculating unit 703 configured to calculate CQI of an ABS according to usable PDSCH resources in the ABS;
wherein the resources occupied by the downlink control channel are not assumed into the usable PDSCH resources in the ABS, and resources occupied by a CRS determined according to a multicast-broadcast single frequency network (MBSFN) subframe and resources occupied by a CP determined according to the MBSFN subframe are not assumed into the usable PDSCH resources in the ABS either; and wherein the number of the resources in the almost blank subframe occupied by the downlink control channel is 0.

In still another embodiment, when the terminal equipment is configured with a UE-specific reference signal, resources occupied by the UE-specific reference signal are not assumed into the usable PDSCH resources in the ABS, and the terminal equipment further includes:
a second determining unit 704 configured to determine resources of the ABS occupied by the UE-specific reference signal;
wherein when the terminal equipment is configured with feedback of precoding matrix index and rank index (PMI/RI), the second determining unit 704 determines the resources of the ABS occupied by the UE-specific reference signal according to an RI that is latest fed back; and when the terminal equipment is not configured with the feedback of the PMI/RI, the second determining unit 704 determines the resources of the ABS occupied by the UE-specific reference signal according to predefinition.

With the terminal equipment of this embodiment, calculation of corresponding CQI varies along with a change of a usable PDSCH resource, so as to avoid degradation of accuracy of CQI calculation due to a load change, thereby improving the performance of the system.

An embodiment of the present invention further provides terminal equipment, as described in Embodiment 8 below. As the principle of the terminal equipment for solving problems is similar to that of the method for calculating channel quality information in Embodiment 2, the implementation of the method may be referred to for the implementation of the terminal equipment, and the repeated parts shall not be described any further.

### Embodiment 8

Fig. 8 is a schematic diagram of the structure of the terminal equipment of Embodiment 8 of the present invention. The terminal equipment is used for calculating channel quality information. Referring to Fig. 8, the terminal equipment includes:
a determining unit 801 configured to determine usable PDSCH resources in a non-backward compatible carrier, according to a predefined proportion of the number of usable PDSCH resources to the number of the total resources or a predefined proportion of the number of unusable PDSCH resources to the number of the total resources, when the non-backward compatible carrier is configured; and
a calculating unit 802 configured to calculate CQI of the non-backward compatible carrier according to the usable PDSCH resources in the non-backward compatible carrier determined by the determining unit 801.

With the terminal equipment of this embodiment, degradation of accuracy of CQI calculation due to a load change may also be avoided, thereby improving the performance of the system.

An embodiment of the present invention further provides terminal equipment, as described in Embodiment 9 below. As the principle of the terminal equipment for solving problems is similar to that of the method for calculating channel quality information in Embodiment 3, the implementation of the method may be referred to for the implementation of the terminal equipment, and the repeated parts shall not be described any further.

### Embodiment 9

Fig. 9 is a schematic diagram of the structure of the terminal equipment of Embodiment 9 of the present invention. The terminal equipment is used for calculating channel quality information. Referring to Fig. 9, the terminal equipment includes:
a calculating unit 901 configured to calculate CQI of an ABS, according to usable PDSCH resources in the ABS;
wherein the number of resources occupied by a downlink control channel are not assumed into the usable PDSCH resources in the ABS, and the number of resources occupied by a cell-specific reference signal and the number of resources occupied by a CP determined according to an MBSFN subframe are not assumed into the usable PDSCH resources in the ABS either; and wherein the number of resources occupied by the downlink control channel is 0.

In an embodiment, when the terminal equipment is configured with a UE-specific reference signal, resources occupied by the UE-specific reference signal are not assumed into the usable PDSCH resources in the ABS, and the terminal equipment further includes:
a determining unit 902 configured to determine resources of the ABS occupied by the UE-specific reference signal;
wherein when the terminal equipment is configured with feedback of precoding matrix index and rank index (PMI/RI), the determining unit 902 determines the resources of the ABS occupied by the UE-specific reference signal according to an RI that is latest fed back; and when the terminal equipment is not configured with the feedback of the PMI/RI, the determining unit 902 determines the resources of the ABS occupied by the UE-specific reference signal according to predefinition.

With the terminal equipment of this embodiment, calculation of corresponding CQI varies along with a change of a usable PDSCH resource, so as to avoid degradation of accuracy of CQI calculation due to a load change, thereby improving the performance of the system.

An embodiment of the present invention further provides terminal equipment, as described in Embodiment 10 below. As the principle of the terminal equipment for solving problems is similar to that of the method for calculating channel quality information in Embodiment 4, the implementation of the method may be referred to for the implementation of the terminal equipment, and the repeated parts shall not be described any further.

### Embodiment 10

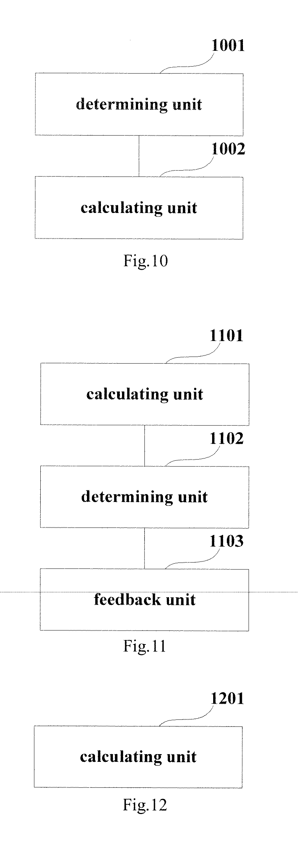

Fig. 10 is a schematic diagram of the structure of the terminal equipment of Embodiment 10 of the present invention. The terminal equipment is used for calculating channel quality information. Referring to Fig. 10, the terminal equipment includes:
a determining unit 1001 configured to determine usable PDSCH resources in an ABS, according to a predefined proportion of the number of usable PDSCH resources to the number of the total resources or a predefined proportion of the number of unusable PDSCH resources to the number of the total resources, when the ABS is configured; and
a calculating unit 1002 configured to calculate CQI of the ABS, according to the usable PDSCH resources in the ABS determined by the determining unit 1001.

With the terminal equipment of this embodiment, degradation of accuracy of CQI calculation due to a load change may also be avoided, thereby improving the performance of the system.

An embodiment of the present invention further provides terminal equipment, as described in Embodiment 11 below. As the principle of the terminal equipment for solving problems is similar to that of the method for feeding back channel quality information in Embodiment 5, the implementation of the method may be referred to for the implementation of the terminal equipment, and the repeated parts shall not be described any further.

### Embodiment 11

Fig. 11 is a schematic diagram of the structure of the terminal equipment of Embodiment 11 of the present invention. The terminal equipment is used for feeding back channel quality information to a base station. Referring to Fig. 11, the terminal equipment includes:
a calculating unit 1101 configured to calculate CQI of an ABS according to usable PDSCH resources in the ABS;
a determining unit 1102 configured to determine a timing for feeding back the CQI of the ABS calculated by the calculating unit 1102, according to a high-layer signaling transmitted by a base station; and
a feedback unit 1103 configured to feed back the CQI of the ABS to the base station at the timing determined by the determining unit 1102.

With the terminal equipment of this embodiment, a feedback step of the CQI of the ABS is added, which provides a basis for efficiently adaptive scheduling downlink by the base station.

### Embodiment 12

Fig. 12 is a schematic diagram of the structure of terminal equipment of Embodiment 12 of the present invention. The terminal equipment is used for calculating channel quality information. Referring to Fig. 12, the terminal equipment includes:
a calculating unit 1201 configured to calculate channel quality information (CQI) according to usable PDSCH resources; wherein resources occupied by a UE-specific reference signal are not assumed into the usable PDSCH resources.

In an embodiment, resources occupied by a downlink control channel are not assumed into the usable PDSCH resources, the number of resources occupied by the downlink control channel being a positive integer less than 3.

In an embodiment, resources occupied by a CRS are not assumed into the usable PDSCH resources, the number of the resources occupied by the CRS being 0.

In an embodiment, resources occupied by a CRS determined according to an MBSFN subframe and resources occupied by a CP determined according to the MBSFN subframe are not assumed into the usable PDSCH resources.

In an embodiment, the resources occupied by the UE-specific reference signal are determined according to whether PMI/RI feedback is configured, and when the PMI/RI feedback is configured, the number of resources occupied by the UE-specific reference signal are determined according to an RI that is latest fed back; and when the PMI/RI feedback is not configured, the number of resources occupied by the UE-specific reference signal are determined according to predefinition.

With the terminal equipment of this embodiment, degradation of accuracy of CQI calculation due to a load change may also be avoided, thereby improving the performance of the system.

An embodiment of the present invention further provides a computer-readable program, wherein when the program is executed in terminal equipment, the program enables a computer to carry out the method for calculating channel quality information as described in embodiments 1-5 or the method for feeding back channel quality information as described in Embodiment 5 in the terminal equipment.

An embodiment of the present invention further provides a storage medium in which a computer-readable program is stored, wherein the computer-readable program enables a computer to carry out the method for calculating channel quality information as described in embodiments 1-5 or the method for feeding back channel quality information as described in Embodiment 5 in terminal equipment.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A method for calculating channel quality information, comprising:
calculating, by a terminal, channel quality information of a non-backward compatible carrier, according to usable PDSCH resources in the non-backward compatible carrier;
wherein resources occupied by a downlink control channel are not assumed into the usable PDSCH resources in the non-backward compatible carrier, the number of resources occupied by the downlink control channel being less than the number of usable resources configured by a base station for a downlink control channel in a backward compatible carrier.

2. The method according to claim 1, wherein the number of the resources occupied by the downlink control channel is 0 or 1 or 2.

3. The method according to claim 2, wherein resources occupied by a cell-specific reference signal are not assumed into the usable PDSCH resources in the non-backward compatible carrier, the number of the resources occupied by the cell-specific reference signal being 0.

4. The method according to claim 2 or 3, wherein for a terminal configured with a UE-specific reference signal, resources occupied by the UE-specific reference signal are not assumed into the usable PDSCH resources in the non-backward compatible carrier; and wherein the method further comprises:
determining resources of the non-backward compatible carrier occupied by the UE-specific reference signal, in particular:
when the terminal is configured with feedback of precoding matrix index and rank index, it determines the resources of the non-backward compatible carrier occupied by the UE-specific reference signal according to a rank index that is fed back latest; and when the terminal is not configured with the feedback of precoding matrix index and rank index, it determines the resources of the non-backward compatible carrier occupied by the UE-specific reference signal according to a pre-defined scheme.

5. The method according to claim 2, wherein the method further comprises:
calculating, by the terminal, channel quality information of an almost blank subframe, according to usable PDSCH resources in the almost blank subframe;
wherein the resources occupied by the downlink control channel are not assumed into the usable PDSCH resources in the almost blank subframe, and resources occupied by a cell-specific reference signal determined according to a multicast-broadcast single frequency network subframe and resources occupied by a cyclic prefix determined according to a multicast-broadcast single frequency network subframe are not assumed into the usable PDSCH resources in the almost blank subframe either; and wherein the number of resources in the almost blank subframe occupied by the downlink control channel is 0.

6. The method according to claim 5, wherein for a terminal configured with a UE-specific reference signal, resources occupied by the UE-specific reference signal are not assumed into the usable PDSCH resources in the almost blank subframe; and wherein the method further comprises:
determining resources of the almost blank subframe occupied by the UE-specific reference signal, in particular:
when the terminal is configured with feedback of precoding matrix index and rank index, it determines the resources of the almost blank subframe occupied by the UE-specific reference signal according to a rank index that is fed back latest; and when the terminal is not configured with the feedback of precoding matrix index and rank index, it determines the resources of the almost blank subframe occupied by the UE-specific reference signal according to a predefined scheme.

7. A method for calculating channel quality information, comprising:
determining, by a terminal, usable PDSCH resources in a non-backward compatible carrier, according to a predefined proportion of the number of usable PDSCH resources to the number of the total resources or a predefined proportion of the number of unusable PDSCH resources to the number of the total resources, when the terminal is configured with the non-backward compatible carrier, and
calculating, by the terminal, channel quality information of the non-backward compatible carrier, according to the determined usable PDSCH resources in the non-backward compatible carrier.

8. A method for calculating channel quality information, comprising:
calculating, by a terminal, channel quality information of an almost blank subframe, according to usable PDSCH resources in the almost blank subframe;
wherein the number of resources occupied by a downlink control channel are not assumed into the usable PDSCH resources in the almost blank subframe, and the number of resources occupied by a cell-specific reference signal determined according to a multicast-broadcast single frequency network subframe and the number of resources occupied by a cyclic prefix determined according to a multicast-broadcast single frequency network subframe are not assumed into the usable PDSCH resources in the almost blank subframe either; and wherein the number of resources occupied by the downlink control channel is 0.

9. The method according to claim 8, wherein for a terminal configured with a UE-specific reference signal, resources occupied by the UE-specific reference signal are not assumed into the usable PDSCH resources in the almost blank subframe; and wherein the method further comprises:
determining resources of the almost blank subframe occupied by the UE-specific reference signal, in particular:
when the terminal is configured with feedback of precoding matrix index and rank index, it determines the number of the resources of the almost blank subframe occupied by the UE-specific reference signal according to a rank index that is fed back latest; and when the terminal is not configured with the feedback of precoding matrix index and rank index, it determines the number of the resources of the almost blank subframe occupied by the UE-specific reference signal according to a predefined scheme.

10. A method for calculating channel quality information, comprising:
determining, by a terminal, usable PDSCH resources in an almost blank subframe, according to a predefined proportion of the number of usable PDSCH resources to the number of the total resources or a predefined proportion of the number of unusable PDSCH resources to the number of the total resources, when the terminal is configured with the almost blank subframe; and
calculating, by the terminal, channel quality information of the almost blank subframe, according to the determined usable PDSCH resources in the almost blank subframe.

11. A method for feeding back channel quality information, comprising:
calculating, by a terminal, channel quality information of an almost blank subframe, according to usable PDSCH resources in the almost blank subframe;
determining, by the terminal, a timing for feeding back the channel quality information of the almost blank subframe, according to a high-layer signaling transmitted by a base station; and
feeding back, by the terminal, the channel quality information of the almost blank subframe to the base station at the determined timing.

12. A method for calculating channel quality information, comprising:
calculating, by a terminal, channel quality information according to usable PDSCH resources;
wherein resources occupied by a UE-specific reference signal are not assumed into the usable PDSCH resources.

13. The method according to claim 12, wherein resources occupied by a downlink control channel are not assumed into the usable PDSCH resources, the number of resources occupied by the downlink control channel being a positive integer less than 3.

14. The method according to claim 12 or 13, wherein resources occupied by a cell-specific reference signal are not assumed into the usable PDSCH resources, the number of resources occupied by the cell-specific reference signal being 0.

15. The method according to claim 12 or 13, wherein resources occupied by a cell-specific reference signal determined according to a multicast-broadcast single frequency network subframe and resources occupied by a cyclic prefix determined according to a multicast-broadcast single frequency network subframe are not assumed into the usable PDSCH resources.

16. The method according to claim 12, wherein the resources occupied by the UE-specific reference signal are determined according to whether feedback of precoding matrix index and rank index is configured, and when the feedback of precoding matrix index and rank index is configured, the number of the resources occupied by the UE-specific reference signal are determined according to a rank index that is fed back latest, and when the feedback of precoding matrix index and rank index is not configured, the resources occupied by the UE-specific reference signal are determined according to a predefined scheme.

17. Terminal equipment, used for calculating channel quality information, wherein the terminal equipment comprises:
a first calculating unit configured to calculate channel quality information of a non-backward compatible carrier, according to usable PDSCH resources in the non-backward compatible carrier;
wherein resources occupied by a downlink control channel are not assumed into the usable PDSCH resources in the non-backward compatible carrier, the number of resources occupied by the downlink control channel being less than the number of usable resources configured by a base station for a downlink control channel in a backward compatible carrier.

18. The terminal equipment according to claim 17, wherein the number of the resources occupied by the downlink control channel is 0 or 1 or 2.

19. The terminal equipment according to claim 18, wherein resources occupied by a cell-specific reference signal are not assumed into the usable PDSCH resources in the non-backward compatible carrier, the number of the resources occupied by the cell-specific reference signal being 0.

20. The terminal equipment according to claim 18 or 19, wherein when the terminal equipment is configured with a UE-specific reference signal, resources occupied by the UE-specific reference signal are not assumed into the usable PDSCH resources in the non-backward compatible carrier, and the terminal equipment further comprises:
a first determining unit configured to determine resources of the non-backward compatible carrier occupied by the UE-specific reference signal;
wherein when the terminal equipment is configured with feedback of precoding matrix index and rank index, the first determining unit determines the resources of the non-backward compatible carrier occupied by the UE-specific reference signal according to a rank index that is fed back latest; and when the terminal equipment is not configured with the feedback of precoding matrix index and rank index, the first determining unit determines the resources of the non-backward compatible carrier occupied by the UE-specific reference signal according to a predefined scheme.

21. The terminal equipment according to claim 18, wherein the terminal equipment further comprises:
a second calculating unit configured to calculate channel quality information of an almost blank subframe, according to usable PDSCH resources in the almost blank subframe;
wherein the resources occupied by the downlink control channel are not assumed into the usable PDSCH resources in the almost blank subframe, and resources occupied by a cell-specific reference signal determined according to a multicast-broadcast single frequency network subframe and resources occupied by a cyclic prefix determined according to a multicast-broadcast single -frequency network subframe are not assumed into the usable PDSCH resources in the almost blank subframe either; and wherein the number of resources in the almost blank subframe occupied by the downlink control channel is 0.

22. The terminal equipment according to claim 21, wherein when the terminal equipment is configured with a UE-specific reference signal, resources occupied by the UE-specific reference signal are not assumed into the usable PDSCH resources in the almost blank subframe, and the terminal equipment further comprises:
a second determining unit configured to determine resources of the almost blank subframe occupied by the UE-specific reference signal;
wherein when the terminal equipment is configured with feedback of precoding matrix index and rank index, the second determining unit determines the resources of the almost blank subframe occupied by the UE-specific reference signal according to a rank index that is fed back latest; and when the terminal equipment is not configured with the feedback of precoding matrix index and rank index, the second determining unit determines the resources of the almost blank subframe occupied by the UE-specific reference signal according to a predefined scheme.

23. Terminal equipment, used for calculating channel quality information, wherein the terminal equipment comprises:
a determining unit configured to determine usable PDSCH resources in a non-backward compatible carrier, according to a predefined proportion of the number of usable PDSCH resources to the number of the total resources or a predefined proportion of the number of unusable PDSCH resources to the number of the total resources, when the non-backward compatible carrier is configured; and
a calculating unit configured to calculate channel quality information of the non-backward compatible carrier, according to the usable PDSCH resources in the non-backward compatible carrier determined by the determining unit.

24. Terminal equipment, used for calculating channel quality information, wherein the terminal equipment comprises:
a calculating unit configured to calculate channel quality information of an almost blank subframe, according to usable PDSCH resources in the almost blank subframe;
wherein the number of resources occupied by a downlink control channel are not assumed into the usable PDSCH resources in the almost blank subframe, and the number of resources occupied by a cell-specific reference signal and the number of resources occupied by a cyclic prefix determined according to a multicast-broadcast single frequency network subframe are not assumed into the usable PDSCH resources in the almost blank subframe; and wherein the number of resources occupied by the downlink control channel is 0.

25. The terminal equipment according to claim 24, wherein when the terminal equipment is configured with a UE-specific reference signal, resources occupied by the UE-specific reference signal are not assumed into the usable PDSCH resources in the almost blank subframe, and the terminal equipment further comprises:
a determining unit configured to determine resources of the almost blank subframe occupied by the UE-specific reference signal;
wherein when the terminal equipment is configured with feedback of precoding matrix index and rank index, the determining unit determines the resources of the almost blank subframe occupied by the UE-specific reference signal according to a rank index that is fed back latest; and when the terminal equipment is not configured with the feedback of precoding matrix index and rank index, the determining unit determines the resources of the almost blank subframe occupied by the UE-specific reference signal according to a predefined scheme.

26. Terminal equipment, used for calculating channel quality information, wherein the terminal equipment comprises:
a determining unit configured to determine usable PDSCH resources in an almost blank subframe, according to a predefined proportion of the number of usable PDSCH resources to the number of the total resources or a predefined proportion of the number of unusable PDSCH resources to the number of the total resources, when the almost blank subframe is configured; and
a calculating unit configured to calculate channel quality information of the almost blank subframe, according to the usable PDSCH resources in the almost blank subframe determined by the determining unit.

27. Terminal equipment, used for feeding channel quality information back to a base station, wherein the terminal equipment comprises:
a calculating unit configured to calculate channel quality information of an almost blank subframe, according to usable PDSCH resources in the almost blank subframe;
a determining unit configured to determine a timing for feeding back the channel quality information of the almost blank subframe calculated by the calculating unit, according to a high-layer signaling transmitted by the base station; and
a feedback unit configured to feed back the channel quality information of the almost blank subframe to the base station at the timing determined by the determining unit.

28. Terminal equipment, used for calculating channel quality information, wherein the terminal equipment comprises:
a calculating unit configured to calculate channel quality information according to usable PDSCH resources;
wherein resources occupied by a UE-specific reference signal are not assumed into the usable PDSCH resources.

29. The terminal equipment according to claim 28, wherein resources occupied by a downlink control channel are not assumed into the usable PDSCH resources, the number of resources occupied by the downlink control channel being a positive integer less than 3.

30. The terminal equipment according to claim 28 or 29, wherein resources occupied by a cell-specific reference signal are not assumed into the usable PDSCH resources, the number of resources occupied by the cell-specific reference signal being 0.

31. The terminal equipment according to claim 28 or 29, wherein resources occupied by a cell-specific reference signal determined according to a multicast-broadcast single frequency network subframe and resources occupied by a cyclic prefix determined according to a multicast-broadcast single frequency network subframe are not assumed into the usable PDSCH resources.

32. The terminal equipment according to claim 28, wherein the resources occupied by the UE-specific reference signal are determined according to whether feedback of precoding matrix index and rank index is configured, and when the feedback of precoding matrix index and rank index is configured, the number of resources occupied by the UE-specific reference signal are determined according to a rank index that is fed back latest, and when the feedback of precoding matrix index and rank index is not configured, the number of resources occupied by the UE-specific reference signal are determined according to a predefined scheme.

33. A computer-readable program, wherein when the program is executed in terminal equipment, the program enables a computer to carry out the method for calculating or feeding back channel quality information as claimed in any one of claims 1-16 in the terminal equipment.

34. A storage medium in which a computer-readable program is stored, wherein the computer-readable program enables a computer to carry out the method for calculating or feeding back channel quality information as claimed in any one of claims 1-16 in terminal equipment.
